# EUROPEAN PATENT APPLICATION

(11) **EP 4 301 093 A1**
(43) Date of publication of application: **03.01.2024**
(21) Application number: 23181990.5
(22) Date of filing: 28.06.2023
(51) Int. Cl.: H05B 6/64, B65D 81/34

(54) **SET FOR MICROWAVE HEATING AND PACKAGE**

(30) Priority: 30.06.2022 JP 2022105489
(71) Applicant: AJINOMOTO CO., INC., Chuo-ku Tokyo 104-8315 (JP)
(72) Inventor: HOSOKAWA, Kaoru, Kanagawa 210-8681 (JP); ABE, Yasuhiro, Kanagawa 210-8681 (JP)
(74) Representative: Strehl Schübel-Hopf & Partner

(57) **Abstract**

To provide a set for microwave heating that is capable of giving a crispy texture to a food by using a heating element configured to generate heat by microwave irradiation and is capable of maintaining softness of a portion in a surface of a food other than a fried face if any, and to provide a package including the set for microwave heating and an outer packaging bag configured to accommodate the set for microwave heating.

Provided is a set for microwave heating, comprising: a tray; a food accommodated in the tray; and a heating laminate comprising a heating element configured to generate heat by microwave irradiation, and a substrate, wherein
the heating laminate is disposed in such a way that the heating element side faces the food, and
the substrate is laminated on a face of the heating element, the face being opposite to another face of the heating element, the another face being to be or come in contact with the food.

## Description

### BACKGROUND OF THE INVENTION

### 1. Field of the Invention

The present invention relates to a set for microwave heating and a package.

### 2. Description of the Related Art

A study has been conducted in which, when a frozen food such as a frozen fried gyoza dumpling (pot-sticker) is heated in a microwave oven, a heating element configured to generate heat by microwave irradiation (also referred to as "a microwave-absorbing heating element" in the present specification) is brought into contact with the food to give a fresh fried light texture, what is called a crispy texture, to the food (for example, see Japanese Patent Application Laid-open No. 2013-071780).

### SUMMARY OF THE INVENTION

In the case of a food, such as a fried gyoza dumpling, having a fried face only in a part of a surface of the food, it is desirable that the fried face is hard and crispy meanwhile a portion other than the fried face, such as a joint edge portion of the gyoza dumpling, that is, a portion in which peripheral portions of the gyoza dumpling skin wrapping the filling are pleated-joined, is soft.

However, there are problems in that microwave heating using the microwave-absorbing heating element sometimes fails in producing an appropriate crispy texture or gives a hard texture to a portion other than the fried face, such as the joint edge portion of the gyoza dumpling.

Therefore, an object of the present invention is to provide a set for microwave heating that is capable of giving a crispy texture to a food by using a heating element configured to generate heat by microwave irradiation and is capable of maintaining softness of a portion in a surface of a food other than a fried face if any, and to provide a package including the set for microwave heating and an outer packaging bag configured to accommodate the set for microwave heating.

The inventors found that the above-described problems can be solved by disposing a microwave-absorbing heating element to be or come in contact with a food and laminating a substrate on a face of the heating element, the face being opposite to a face thereof being or coming in contact with the food, and thus accomplished the present invention.

The present invention is based on the above-described finding and specifically has the following configurations.
[1] A set for microwave heating, comprising:
   a tray;
   a food accommodated in the tray; and
   a heating laminate comprising
      a heating element configured to generate heat by microwave irradiation, and
      a substrate, wherein
   the heating laminate is disposed in such a way that the heating element side faces the food.
[2] A set for microwave heating, comprising:
   a tray;
   a food accommodated in the tray; and
   a heating element configured to generate heat by microwave irradiation, wherein
   the heating element is disposed to be or come in contact with the food, and
   a substrate is laminated on a face of the heating element, the face being opposite to another face of the heating element, the another face being to be or come in contact with the food.
[3] The set for microwave heating according to [1] or [2], wherein an inner wall of the tray is made of a plastic.
[4] The set for microwave heating according to any one of [1] to [3], wherein the heating element is disposed to be or come in contact with a side of the food, the side being at an opening side of the tray opposite to a bottom face side of the tray.
[5] The set for microwave heating according to any one of [1] to [4], wherein, when the heating element is disposed to be or come in contact with a side of the food, the side being at an opening side of the tray opposite to a bottom face side of the tray, an inner wall of the tray is made of a plastic.
[6] The set for microwave heating according to any one of [1] to [5], wherein the heating element comprises a conductive substance-containing thin film layer.
[7] The set for microwave heating according to [6], wherein the heating element further comprises a heat-resistant layer, and the heating element is disposed in such a way that the heat-resistant layer is to be or come in contact with the food.
[8] The set for microwave heating according to [6] ot [7], wherein, in a direction parallel to a bottom face of the tray, an outer edge of the conductive substance-containing thin film layer is positioned inside an inner wall of the tray without being in contact with the inner wall of the tray.
[9] The set for microwave heating according to any one of [6] to [8], wherein, in a direction parallel to a bottom face of the tray, the heating element and the substrate are laminated without an outer edge of the conductive substance-containing thin film layer protruding out of an outer edge of the substrate.
[10] The set for microwave heating according to [9], wherein, in the direction parallel to the bottom face of the tray, the heating element and the substrate are laminated in such a way that the outer edge of the conductive substance-containing thin film layer is positioned inside the outer edge of the substrate.
[11] The set for microwave heating according to any one of [1] to [10], further comprising a lid configured to cover the tray on an opening side of the tray, the opening side being opposite to a bottom face side of the tray, wherein
   the heating element is laminated via the substrate on a side of a top panel of the lid, the top panel facing a bottom face of the tray, the side being closer to the food.
[12] The set for microwave heating according to [11], wherein
   the heating element comprises a conductive substance-containing thin film layer, and
   the heating element is laminated via the substrate on a back face of the top panel of the lid in such a way that an outer edge of the conductive substance-containing thin film layer is positioned inside an outer edge of the top panel of the lid without protruding out of the outer edge of the top panel of the lid.
[13] The set for microwave heating according to any one of [1] to [12], wherein the food and the heating element are accommodated in the tray without protruding from an opening of the tray in a cross section perpendicular to a bottom face of the tray.
[14] The set for microwave heating according to any one of [1] to [13], wherein the food is a ready-cooked food having a fried face, and the heating element is disposed to be or come in contact with the fried face.
[15] The set for microwave heating according to any one of [1] to [14], wherein the food is a filling-wrapping food, and the heating element is disposed to be or come in contact with the fried face of the filling-wrapping food.
[16] The set for microwave heating according to any one of [1] to [15], wherein the food is a frozen food.
[17] The set for microwave heating according to any one of [1] to [16], wherein a bottom face of the tray has a shape to maintain a posture of the food.
[18] The set for microwave heating according to any one of [1] to [17], further comprising a cover disposed on the food and having a shape to maintain a posture of the food.
[19] The set for microwave heating according to any one of [1] to [18], wherein the substrate has a thickness of 0.02 mm or more.
[20] The set for microwave heating according to any one of [1] to [19], wherein a film covering an opening of the tray is compression-bonded to an upper end of the tray, the opening being on an opposite side to a bottom face of the tray.
[21] The set for microwave heating according to [20], wherein the heating element is laminated via the substrate on a side of the film, the side facing the food accommodated in the tray.
[22] The set for microwave heating according to [21], wherein
   the heating element comprises a conductive substance-containing thin film layer, and
   the heating element is laminated on a back face of the film via the substrate in such a way that an outer edge of the conductive substance-containing thin film layer is positioned inside an outer edge of an inner wall of the film without protruding from the outer edge of the inner wall of the film, the outer edge of the inner wall being delimited by a portion of the film compression-bonded to the upper end of the tray.
[23] The set for microwave heating according to any one of [1] to [22], wherein the substrate has a thickness of 0.02 mm or more and less than 0.65 mm.
[24] The set for microwave heating according to any one of [1] to [22], wherein the substrate has a thickness of more than 0.62 mm.
[25] A package, comprising:
   the set for microwave heating according to any one of [1] to [24]; and
   an outer packaging bag configured to accommodate the set for microwave heating.
[26] The package according to [25], wherein the substrate has a thickness of 0.02 mm or more and less than 0.65 mm.
[27] The package according to [25], wherein the substrate has a thickness of more than 0.62 mm.

According to the present invention, there can be provided a set for microwave heating that is capable of giving a crispy texture to a food by using a heating element configured to generate heat by microwave irradiation and is capable of maintaining softness of a portion in a surface of a food other than a fried portion if any, and provided a package including the set for microwave heating and an outer packaging bag configured to accommodate the set for microwave heating.

### BRIEF DESCRIPTION OF THE DRAWINGS

Fig. 1 is a cross-sectional view of an example of a set for microwave heating of an aspect A;
Fig. 2 is an overhead view of examples of a cross section p illustrated in Figs. 1 and 4;
Fig. 3 is a cross-sectional view of an example in which a tray of the set for microwave heating of the aspect A has a V-shaped bottom face;
Fig. 4 is a cross-sectional view of an example of a set for microwave heating of an aspect B;
Fig. 5 is a cross-sectional view of an example of the set for microwave heating of the aspect B, the set for microwave heating including a cover;
Fig. 6 is a cross-sectional view of an example of the set for microwave heating of the aspect A, the set for microwave heating including a top seal;
Fig. 7 is a cross-sectional view of an example in which the tray of the set for microwave heating of the aspect A, the set for microwave heating including the top seal, has a V-shaped bottom face;
Fig. 8 is a cross-sectional view of an example of the set for microwave heating of the aspect B, the set for microwave heating including a top seal;
Fig. 9 is a cross-sectional view of an example of a package in which the set for microwave heating of the aspect A is accommodated in an outer packaging bag;
Fig. 10 is a cross-sectional view of an example of a package in which the set for microwave heating of the aspect A including the tray having the V-shaped bottom face is accommodated in the outer packaging bag;
Fig. 11 is a cross-sectional view of an example of a package in which the set for microwave heating of the aspect B is accommodated in an outer packaging bag;
Fig. 12 is a cross-sectional view for illustrating, for example, a vertical positional relationship when packages of Examples 1 to 12 are placed in a microwave oven for microwave heating;
Fig. 13 is a cross-sectional view for illustrating, for example, a vertical positional relationship when a set for microwave heating of Example 15 is placed in a microwave oven for microwave heating;
Figs. 14A and 14B are schematic diagrams illustrating an example of a laminate including a microwave-absorbing heating element and a substrate;
Figs. 15A and 15B are schematic diagrams illustrating an example of the aspect A including a lid; and
Fig. 16 is a schematic diagram illustrating an example of the back face of a top seal material on which the microwave-absorbing heating element is laminated.

### DETAILED DESCRIPTION OF THE PREFERRED EMBODIMENTS

Hereinafter, preferable embodiments of the present invention will be described. The present invention is not limited by the following description, and constituents may be changed as appropriate without departing from the gist of the present invention.

### Set for Microwave Heating

A set for microwave heating according to the present invention includes a tray, a food accommodated in the tray, and a heating element (a microwave-absorbing heating element) configured to generate heat by microwave irradiation.

### Tray

The tray in the present invention is not particularly limited as long as the tray is capable of accommodating the food, and usually has a bottom or a bottom face and a side wall or a side face, in which the outer edge of the bottom or the bottom face is connected to the lower end of the side wall. The outer edge of the bottom or the bottom face is preferably continuous with the lower end of the side wall, usually without a gap. In the present specification, the opening side of the tray opposite to the bottom face side of the tray is also simply referred to as "the opening of the tray" or "the opening side of the tray".

In the present invention, there may be applied an aspect (referred to as "the former aspect" in this paragraph) in which the bottom or the bottom face of the tray is positioned on the vertically lower side meanwhile the opening of the tray is positioned on the vertically upper side, or an aspect (referred to as "the latter aspect" in this paragraph) in which the bottom or the bottom face of the tray is positioned on the vertically upper side meanwhile the opening of the tray is positioned on the vertically lower side. The latter aspect can be feasible particularly when the aspect includes an outer packaging bag and/or a top seal material described below. In the present specification, for the sake of convenience, the former aspect will be mainly described using the positional concept such as the upper or lower side, but, the present invention further includes the latter aspect by turning upside down, for example, unless otherwise stated.

The tray may be configured in such a manner that the side wall is perpendicular to the bottom or the bottom face, and the bottom face and the opening at the upper end of the tray are of the same size and shape in a direction parallel to the bottom face. Furthermore, the tray may be configured in such a manner that the area of the opening at the upper end of the tray is larger than the area of the bottom face in the direction parallel to the bottom face. In this case, the opening and the bottom face are usually similar in shape.

A material of the tray is not particularly limited as long as the material can be used for microwave heating, but the material is preferably heat-resistant enough to avoid, for example, melting and deformation caused by microwave heating. Examples of the material include paper, such as paperboards and cardboards; and plastics such as polyvinyl chloride, polyethylene terephthalate (PET), polystyrene, polypropylene, and polycarbonate. In the present invention, for example, laminating the substrate can preferably prevent the tray from melting due to heat generated by the microwave-absorbing heating element, and therefore, the tray may be a paper tray or a tray having a plastic inner wall. The latter type of the tray may be, for example, a tray made of a material other than plastics such as a paper tray, the tray including an inner wall having a plastic lining or coating, or may be a plastic tray the entirety of which is made of a plastic. A method for molding the plastic tray is not particularly limited, and examples of the method include injection molding, blow molding, vacuum molding, and compressed-air molding. Thus, in the present invention, even a plastic tray that has not been conventionally used because of the prevention of melting caused by heat generated by a heating element can be used. For example, a tray that has been conventionally used for frozen foods, refrigerated foods, and the likes can be used.

The tray is preferably deep enough to accommodate the food and the microwave-absorbing heating element without allowing the food and the microwave-absorbing heating element to protrude out of the opening of the tray in a cross section perpendicular to the bottom face. Such tray can easily prevent damage to the food and disorder in the position and posture of the food on the tray during product transportation or the like. Specifically, in a cross section perpendicular to the bottom face of the tray, the depth of such tray is preferably greater than or equal to the sum total of the height of the food, the thickness of the microwave-absorbing heating element, and the thickness of the substrate laminated on the heating element. The sum total is preferably a sum total obtained before microwave heating. For example, in the case of a frozen food, the sum total is preferably a sum total obtained when the frozen food is in a frozen state.

The bottom face of the tray may be a plane having no protrusions-and-recesses or flat, may have a recess or protrusions-and-recesses for accommodating the food, may have a shape for maintaining the posture of the food, may have protrusions-and-recesses such as grooves that are different from the protrusions-and-recesses for accommodating the food or maintaining the posture of the food, or may have a combination of them. The shape for maintaining the posture of the food may also be the shape of the recess or the protrusions-and-recesses for accommodating the food, for example, may be a V-shape in a cross section perpendicular to the bottom face. Depending on the shape of the food, the bottom face of the tray sometimes preferably has such shape for maintaining the posture of the food, from the viewpoints of more easily preventing damage to the food and disorder in the position and posture of the food on the tray during product transportation or the like and, in addition, more easily bringing the food and the microwave-absorbing heating element into contact with each other. The bottom face of the tray will be described later.

### Food

The food in the present invention is not particularly limited as long as the food can be subjected to microwave heating, and may be a raw food or a heated food. Examples of the heated food include cooked foods, such as ready-cooked foods and semi-cooked foods, and, for example, the heated food may be a later-described filling-wrapping food.

The food may be a frozen food, a refrigerated food (a chilled food), or a non-refrigerated food, preferably a frozen food or a refrigerated food, and more preferably a frozen food. In the case where the food is a frozen food, the temperature for freezing the food is not particularly limited, but, for example, it is beneficial that the food is quick-frozen at -35°C or lower and then the temperature is adjusted to -10 to -20°C. In the case where the food is a refrigerated food, the temperature for refrigeration is preferably 0 to 10°C.

The food is preferably a food suitable for frying or baking. Examples of the food include ready-cooked foods and foods made of dough, such as pizza, Okonomiyaki (Japanese-style pizza-like pancake), Takoyaki (Japanese-style octopus ball cake), and filling-wrapping foods; sweets, such as cookies, biscuits, rice crackers, rice cakes, sponge cakes, and pancakes. Among them, foods for which a crispy texture is desired is preferred, and foods having a fried face are more preferred, and ready-cooked foods having a fried face are still more preferred.

In the present specification, "a fried face" refers to a face of the food, the face having been cooked with heat, for example, having been fried by being brought into contact with a heating element such as a frying pan or a hot plate. In the present invention, the face of the food may be a face to be fried by heat generated by the microwave-absorbing heating element (usually, the generated heat causes the face to be golden-browned, to have a browning mark, or to be deeply browned). The fried face may spread over the entirety of a surface of the food as in the case of pizza, Okonomiyaki, and the like, or may be spread only in a part of the surface of the food as in the case of fried gyoza dumplings and the like.

The fried face may have less moisture than other faces of the food and may also be a face golden-browned, having a browning mark, or deeply browned, for example. For example, in the case of a fried gyoza dumpling, the fried face thereof is usually a face golden-browned, having a browning mark, or deeply browned, resulting from being fried in contact with a heating element such as a frying pan or an iron hot plate, and the face may include what is called a wing of the fried gyoza dumpling (an additional crispy layer around the fried gyoza dumpling). When the fried face is brought into contact with the microwave-absorbing heating element and the microwave-absorbing heating element is caused to generate heat by microwave heating, the fried face can acquire a sufficiently crispy texture.

The food may be configured in such a manner that a face in contact with the microwave-absorbing heating element becomes a fried face owing to heat generation of the microwave-absorbing heating element by microwave heating, and such food may not have the fried face before the microwave heating.

From the viewpoint of achieving a sufficiently crispy texture, the food is preferably shaped so as to have some area in contact with the microwave-absorbing heating element, and, for example, the food may have a flat surface or a planar surface. The flat surface or the planar surface of the food may be a fried face. Alternatively, in the case where the microwave-absorbing heating element has a flat surface or a planar surface, the flat surface or the planar surface is brought into contact with the flat surface or the planar surface of the food and the microwave-absorbing heating element is caused to generate heat by microwave heating, whereby a sufficiently crispy texture can be achieved. Examples of the flat surface or the planar surface of the food include a fried face of a fried gyoza dumpling, and the flat surface or the planar surface may also include what is called a wing of a fried gyoza dumpling (an additional crispy layer around the fried gyoza dumpling).

Furthermore, the food is preferably a filling-wrapping food. The filling-wrapping food is typically a food in which filling (also called a paste) is wrapped. Examples of the filling-wrapping food include a dough sheet filling-wrapping food in which filling is wrapped in a dough sheet. The main ingredient of the dough sheet is cereal flour such as flour, and the secondary ingredients thereof may be, for example, fats and oils, salts, sugars, and seasonings. Examples of the dough sheet filling-wrapping food include gyoza dumplings, shao-mai (steamed meat dumpling), Chinese dumplings, ravioli, and spring rolls. The dough sheet filling-wrapping food is preferably a gyoza dumpling or a spring roll, and more preferably a fried gyoza dumpling.

### Heating Element Configured to Generate Heat by Microwave Irradiation

A heating element (a microwave-absorbing heating element) configured to generate heat by microwave irradiation in the present invention has the characteristic of absorbing microwave energy and converting the microwave energy into heat to generate heat. Such microwave-absorbing heating element is not particularly limited, but generally preferably includes a conductive substance-containing thin film layer, and may include only the conductive substance-containing thin film layer.

Examples of the conductive substance include metals having conductivity (conductive metals), such as aluminum, nickel, stainless steel, gold, silver, platinum, and zinc. The thickness of the conductive substance-containing thin film layer is preferably 50 to 150 angstroms.

The microwave-absorbing heating element in the present invention may further include a heat-resistant layer, preferably a laminate obtained by laminating the heat-resistant layer on the conductive substance-containing thin film layer, and more preferably a laminate obtained by laminating the heat-resistant layer on the conductive substance-containing thin film layer so that the heat-resistant layer is in contact with the conductive substance-containing thin film layer. The heat-resistant layer can function, for example, as a protective layer capable of protecting the conductive substance-containing thin film layer. When the microwave-absorbing heating element includes the heat-resistant layer, the heating element is preferably disposed so that the heat-resistant layer can be in contact with the food. In this aspect, heat generated by the conductive substance-containing thin film layer by microwave irradiation acts on the food (preferably the fried face of the food) via the heat-resistant layer.

The heat-resistant layer is preferably a heat-resistant film layer, and is not particularly limited as long as the film is resistant to heat generated by the conductive substance-containing thin film layer and does not elute toxic substances. Examples of the heat-resistant film that can be used include polyethylene terephthalate (PET), polypropylene, cyclic polyolefin, polymethylpentene, polyethersulfone, polyphenylene sulfide, and polysulfone, but the heat-resistant film is particularly preferably a polyethylene terephthalate film that is heat-fixed in a state of being biaxially oriented.

The heat-resistant layer may further include a release layer or an anti-adhesion layer, such as a silicone resin layer, disposed on a surface of the heat-resistant film layer, the surface being opposite to the conductive substance-containing thin film layer, that is, a surface that can be in contact with the food. When the heat-resistant layer includes the release layer or the anti-adhesion layer, the heating element is preferably disposed so that the release layer or the anti-adhesion layer can be in contact with the food. The release layer or the anti-adhesion layer can easily prevent the food from burning and sticking due to heat generated by the conductive substance-containing thin film layer by microwave irradiation.

The thickness of the heat-resistant layer, preferably the thickness of the heat-resistant film layer is, for example, 0.01 to 60 um, and the lower limit of the thickness is preferably 0.1 um or more, more preferably 1 um or more, and still more preferably 10 um or more, and the upper limit thereof is preferably 50 um or less, more preferably 40 um or less, and still more preferably 30 um or less. In the case where the heat-resistant layer and the later-mentioned substrate are made of the same raw material or material (for example, in the case where both the heat-resistant layer and the substrate are made of a plastic, such as polypropylene, polystyrene, or PET), the thickness of the heat-resistant layer is preferably less than 20 um, meanwhile the thickness of the substrate is preferably 0.02 mm or more.

In the case where the microwave-absorbing heating element includes the heat-resistant layer, there can be used a thin film formed, for example, by vapor deposition or sputtering of a conductive substance, preferably the above-mentioned conductive metal on the heat-resistant layer.

### Substrate

On the microwave-absorbing heating element in the present invention, a substrate is laminated, and a face of the microwave-absorbing heating element, the face being opposite to a face on which the substrate is laminated, is in contact with the food.

The substrate is not particularly limited as long as the substrate can be used for microwave heating, but is preferably a material that is heat resistant enough to avoid, for example, melting and deformation caused by usual microwave heating. Examples of the material may include paper, such as paperboards and cardboards; and plastics, such as polypropylene, polystyrene, and PET; and a composite of a plurality of materials, such as a paper-plastic composite. The substrate may be, for example, a non-plastic material or a material containing no plastic. Examples of the composite include a substrate containing paper and a substrate containing a plastic. Specific examples of the composite include a substrate including paper and a plastic, such as a combination (for example, a laminate) of a paper layer and a plastic layer.

The thickness of the substrate is, for example, 0.02 mm or more, 0.03 mm or more, 0.04 mm or more, preferably 0.05 mm or more, 0.06 mm or more, more preferably 0.07 mm or more, 0.08 mm or more, 0.1 or 0.10 mm or more, still more preferably more than 0.14 mm, 0.15 mm or more, even still more preferably 0.18 mm or more, and particularly preferably 0.2 or 0.20 mm or more, 0.21 mm or more, 0.22 mm or more. The upper limit of the thickness of the substrate is not particularly limited, but is usually, for example, 5 mm or less, 4 mm or less, 3 mm or less, 2.5 mm or less, 2.3 mm or less, preferably 2.1 mm or less, more preferably 2 or 2.0 mm or less, still more preferably 1.8 mm or less, even still more preferably 1.7 mm or less, and particularly preferably 1.5 mm or less.

In the case where greater importance is placed on the prevention of melting of the tray or the later-mentioned outer packaging bag or top seal material, the substrate preferably has a certain level of thickness. However, when the substrate is relatively thin, in the later-mentioned aspect A in which the microwave-absorbing heating element is disposed on the opening side of the tray, the later-mentioned outer packaging bag or top seal material is used to fuse with the microwave-absorbing heating element as described above and thereby can be easily removed together with the microwave-absorbing heating element, so that the outer packaging bag or the top seal material, the substrate, and the heating element can be easily removed in an integrated state, and as a result, only the food can be advantageously easily taken out of the set for microwave heating including the package or the top seal material. Thus, the thickness of the tray can be selected according to purpose.

From the viewpoint of preventing melting of the tray or the outer packaging bag or top seal material, the thickness of the substrate is, for example, more than 0.62 mm, preferably 0.63 mm or more, more preferably 0.64 mm or more, and still more preferably 0.65 mm or more, and the upper limit thereof is not particularly limited, but is usually 5 mm or less, 4 mm or less, 3 mm or less, 2.5 mm or less, 2.3 mm or less, preferably 2.1 mm or less, more preferably 2 or 2.0 mm or less, still more preferably 1.8 mm or less, even still more preferably 1.7 mm or less, and particularly preferably 1.5 mm or less.

From the viewpoint of taking the advantage of capability to easily remove the heating element together with the outer packaging bag or the top seal material, the thickness of the substrate is, for example, 0.02 mm or more, 0.03 mm or more, 0.04 mm or more, preferably 0.05 mm or more, 0.06 mm or more, more preferably 0.07 mm or more, 0.08 mm or more, 0.1 or 0.10 mm or more, still more preferably more than 0.14 mm, 0.15 mm or more, even still more preferably 0.18 mm or more, and particularly preferably 0.2 or 0.20 mm or more, 0.21 mm or more, 0.22 mm or more, and the upper limit thereof is, for example, less than 0.65 mm, preferably 0.64 mm or less, more preferably 0.63 mm or less, still more preferably 0.62 mm or less, and particularly preferably 0.5 mm or less, 0.4 mm or less.

### Laminate including Microwave-absorbing Heating Element and Substrate

In the present specification, a laminate including the microwave-absorbing heating element and the substrate is also referred to as "a heating laminate". That is, the set for microwave heating according to the present invention includes the tray, the food accommodated in the tray, and the heating laminate.

The microwave-absorbing heating element and the substrate are preferably laminated in such a manner that the outer edge of the heating element does not protrude out of the outer edge of the substrate in the direction parallel to the bottom face of the tray. Specifically, an aspect 1 may be applied in which the microwave-absorbing heating element and the substrate are laminated so that the outer edge of the heating element and the outer edge of the substrate are aligned (or fit perfectly with each other or overlap each other), or an aspect 2 may be applied in which the microwave-absorbing heating element and the substrate are laminated so that the outer edge of the heating element is positioned inside the outer edge of the substrate.

In the present specification, "the direction parallel to the bottom face of the tray" can be referred to as a cross section parallel to the bottom face of the tray, such as a cross section including the microwave-absorbing heating element and being parallel to the bottom face of the tray. When such a cross section is viewed overhead, for example, the heating element that may include the conductive substance-containing thin film layer, the substrate, and the inner wall of the tray preferably form a positional relationship described in the present specification.

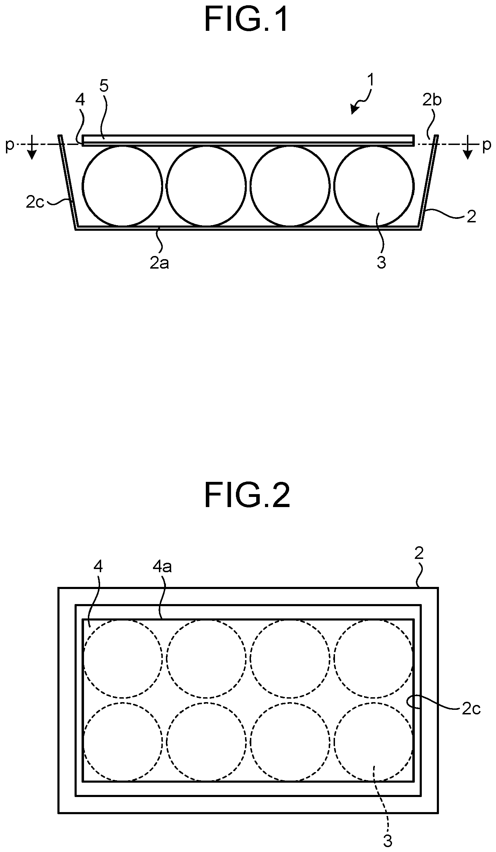

The former aspect 1 is, for example, an aspect in which, in the cross-sectional view of the later-described Fig. 1 perpendicular to the bottom face of the tray, both ends of a microwave-absorbing heating element 4 (corresponding to the outer edge of the heating element in the direction parallel to the bottom face of the tray) and both ends of a substrate 5 (corresponding to the outer edge of the substrate in the direction parallel to the bottom face of the tray) are aligned.

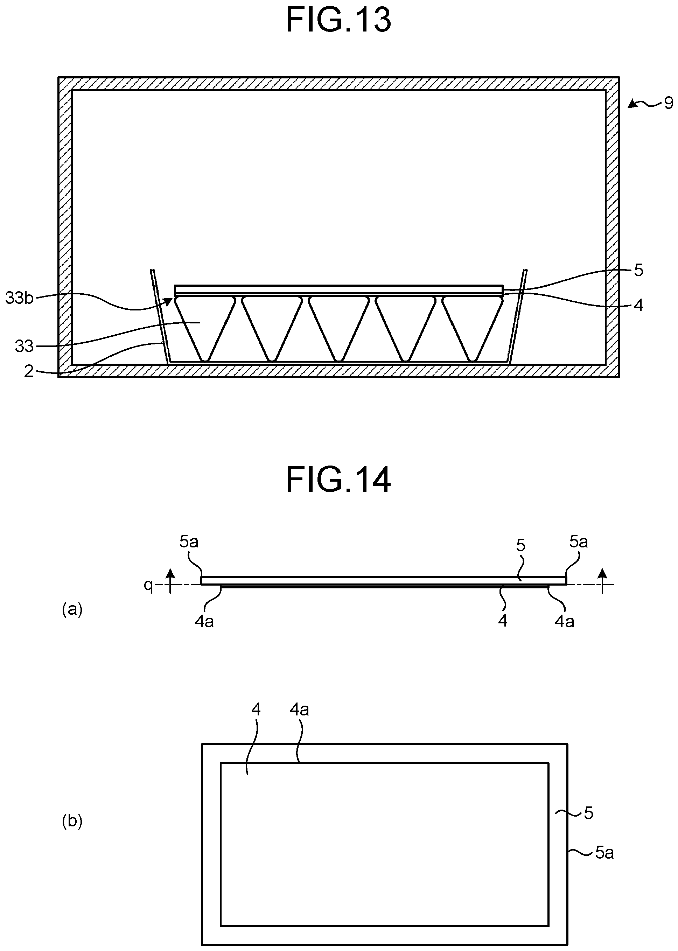

The latter aspect 2 is an aspect in which, in the schematic diagrams of Figs. 14A and 14B illustrating an example of a laminate of the microwave-absorbing heating element and the substrate, in the cross-sectional view of in Fig. 14A perpendicular to the bottom face of the tray, the microwave-absorbing heating element and the substrate are laminated so that both ends 5a of the substrate 5 (corresponding to the outer edge of the substrate in the direction parallel to the bottom face of the tray) protrude out of both ends 4a of the microwave-absorbing heating element 4 (corresponding to the outer edge of the heating element in the direction parallel to the bottom face of the tray). As illustrated in Fig. 14B obtained when a boundary face q between the substrate 5 and the microwave-absorbing heating element 4 in Fig. 14A is viewed from the lower side of Fig. 14A, the microwave-absorbing heating element 4 is laminated in such a manner that the outer edge 4a of the heating element 4 is positioned inside the outer edge 5a of the substrate 5. The aspect 2 can easily realize the later-mentioned aspect in which the microwave-absorbing heating element is disposed so that the outer edge of the microwave-absorbing heating element is positioned inside the inner wall of the tray without being in contact with the inner wall of the tray.

In the figures other than Figs. 14A and 14B, the above-described aspect 1 is illustrated as the laminate of the microwave-absorbing heating element and the substrate, but the aspect 2 may be used in place of the aspect 1.

In the present specification, "the outer edge of the heating element" in the direction parallel to the bottom face of the tray is beneficially at least the outer edge of the conductive substance-containing thin film layer as described below, unless otherwise stated. For example, when the heating element includes the conductive substance-containing thin film layer and the heat-resistant layer, in the case of the aspect 1, the heating element and the substrate are beneficially laminated so that at least the outer edge of the conductive substance-containing thin film layer and the outer edge of the substrate are aligned (or fit perfectly with each other or overlap each other), or alternatively, in the case of the aspect 2, the heating element and the substrate are beneficially laminated so that at least the outer edge of the conductive substance-containing thin film layer is positioned inside the outer edge of the substrate. In these cases, for example, the heating element and the substrate may be laminated so that the outer edge of the heat-resistant layer and the outer edge of the conductive substance-containing thin film layer are aligned (or fit perfectly with each other or overlap each other) or alternatively so that the outer edge of the heat-resistant layer protrudes out of the outer edge of the conductive substance-containing thin film layer. Examples of the latter aspect with the protrusion include an aspect in which the heating element and the substrate are laminated so that the outer edge of the conductive substance-containing thin film layer is positioned inside the outer edge of the heat-resistant layer and positioned inside the outer edge of the substrate, specifically, an aspect in which the heating element and the substrate are laminated so that the outer edge of the heat-resistant layer and the outer edge of the substrate are aligned (or perfectly fit with each other or overlap each other) and the outer edge of the conductive substance-containing thin film layer laminated between the heat-resistant layer and the substrate is positioned inside the outer edge of the heat-resistant layer and/or the outer edge of the substrate.

When a commercial product such as "Susceptor" (registered trademark, trade name, manufactured by Toppan Printing Co., Ltd.) in which a conductive substance-containing thin film layer is vapor-deposited on the above-described heat-resistant film layer and a paper substrate layer is laminated on the conductive substance-containing thin film layer is used as the microwave-absorbing heating element, "the substrate" in the present invention may include the paper substrate layer included in the commercial product and an additional substrate, and may be produced, for example, by sticking the paper substrate layer included in the commercial product and the additional substrate together with an adhesive agent such as a commercially available glue. In this case, the heating laminate may include the microwave-absorbing heating element and the substrate, and the substrate may include an adhesive layer such as the above-mentioned adhesive agent layer.

The shape of the microwave-absorbing heating element or the heating laminate including the microwave-absorbing heating element and the substrate is not particularly limited, but is preferably a sheet or plate shape, and may be a shape including a flat portion or a flat shape or alternatively may be a shape that fits the food. Usually, these shapes can be formed with the substrate or together with the substrate and the heating element. The microwave-absorbing heating element is preferably shaped so as to easily transfer heat to a face of the food, the face being in contact with the heating element. In the case where the face of the food in contact with the heating element is flat or a planar face, the microwave-absorbing heating element is preferably in the shape of a flat plate because of easiness of heat transfer. A microwave-absorbing heating element sheet having minute holes or grooves can also be used.

### Arrangement of Microwave-absorbing Heating Element and Food

The microwave-absorbing heating element in the present invention is provided to have a face in contact with the food, the face being opposite to a face on which the substrate is laminated. The heating laminate including the microwave-absorbing heating element and the substrate is provided so that not the substrate side, but the microwave-absorbing heating element side of the heating laminate is in contact with the food, and therefore, the heating laminate is disposed so that not the substrate side, but the microwave-absorbing heating element side of the heating laminate faces the food. The expression "the heating laminate is disposed in such a way that the microwave-absorbing heating element side of the heating laminate faces the food" may indicate an aspect in which the heating element is disposed to face the food, or an aspect in which the heating element is disposed to be or come in contact with the food.

The expression "the second surface of the heating element faces the food" includes not only an aspect in which the heating element faces the food at a distance, but also an aspect in which the heating element is in contact with the food. Facing the food at a distance includes the aspect in which the heating element can come in contact with the food and the aspect to reduce the distance between the food and the heating element. The heating element may face the food without being in contact with the food. In that case, there may be a gap, preferably a gas-filled gap, between the heating element and the food during storage and during use, i.e., during microwave heating. For the heating element and the food to be able to come in contact with each other or for reducing the distance between them, the gap between the heating element and the food must not be filled with any substance that might hinder or prevent the heating element and the food from coming in contact with each other; rather, the heating element and/or the food must not be fixed. Instead of being fixed, the heating element and/or the food must be movable, e.g., by turning the set for microwave heating upside down, to come in contact with each other or to reduce the distance. For instance, the food is not fixed to the tray and the contact may be accomplished by changing the orientation of the set for microwave heating (for example, by turning the heating element upside down in the vertical direction). The gap defines a distance between the heating element and the food. Said distance is preferably 0 mm to 30 mm, more preferably 0 mm to 10 mm. At the time of microwave heating, the distance may preferably be 0 mm to 5 mm. Preferably, the heating element is arranged between the bottom face of the tray and the food, or the food is arranged between the bottom face of the tray and the heating element. For example, there may be applied an aspect in which the heating element has been already in contact with the food at the time of manufacture or sale, or an aspect in which a gap between the heating element and the food is present at the time when the set for microwave heating or the later-mentioned package is placed so that a face regarded as a top face or an upper face at the time of manufacture or sale is positioned on the vertically upper side, but, by changing the orientation, for example, by turning the set for microwave heating or the package upside down in the vertical direction, the heating element comes in contact with the food. At least when microwave heating is performed, the microwave-absorbing heating element is preferably in contact with the food. Similar to the expression "the heating element faces the food", the expression "the heat-resistant layer faces the food" includes the aspect in which the heat-resistant layer is in contact with the food and the aspect in which the heat-resistant layer can come in contact with the food.

### Aspect in which Microwave-absorbing Heating Element is Disposed on Side of Food Closer to Opening of Tray

An aspect in which the microwave-absorbing heating element is disposed on a side of the food, the side being closer to the opening of the tray (also referred to as "the aspect A" in the present specification) is typically an aspect in which the food is disposed on the bottom face of the tray and the microwave-absorbing heating element is disposed on the food. The microwave-absorbing heating element is disposed in contact with the food, and the substrate is laminated on a face of the heating element, the face being opposite to a face in contact with the food, in other words, the substrate is laminated on a side of the heating element, the side being closer to the opening of the tray. Fig. 1 is a cross-sectional view of an example of the aspect A, the cross-sectional view being perpendicular to the bottom face of the tray. A set for microwave heating 1 is configured in such a manner that a food 3 is disposed on a bottom face 2a of a tray 2, a microwave-absorbing heating element 4 is disposed on the food 3, and a substrate 5 is laminated on a side of the heating element 4, the side being closer to the opening 2b of the tray.

The microwave-absorbing heating element is preferably disposed so that, in the direction parallel to the bottom face of the tray, the outer edge of the heating element is positioned inside the inner wall of the tray without being in contact with the inner wall of the tray. In the present specification, "the outer edge of the heating element" is beneficially at least the outer edge of the conductive substance-containing thin film layer, unless otherwise stated. For example, taking an example of the aspect illustrated in Fig. 1, as illustrated in Fig. 2 obtained when a cross section p of Fig. 1 including the microwave-absorbing heating element 4 in the direction parallel to the bottom face of the tray is viewed overhead, the microwave-absorbing heating element 4 is disposed so that the outer edge 4a of the heating element 4 is positioned inside an inner wall 2c of the tray without being in contact with the inner wall 2c of the tray 2. From the viewpoint of preventing the tray from melting due to heat generated by the microwave-absorbing heating element, the distance between the outer edge of the microwave-absorbing heating element and the inner wall of the tray in the direction parallel to the bottom face of the tray, typically in the cross section p of Fig. 1 including the microwave-absorbing heating element 4 is preferably 1 mm or more, more preferably 2 mm or more, and still more preferably 5 mm or more, and usually preferably 30 mm or less, more preferably 20 mm or less, and still more preferably 10 mm or less.

In order to prevent the microwave-absorbing heating element from shifting from its original position on the food and thereby coming in contact with the inner wall of the tray or protruding out of the opening of the tray during product transportation or the like of the set for microwave heating of the aspect A, the position of the microwave-absorbing heating element is preferably controlled by giving a device to the outer packaging bag or the top seal material or the shape of the substrate. Specific examples of the device include the use of the heating laminate including the microwave-absorbing heating element and the substrate in the above-described aspect 2, the use of a later-mentioned lid having a top panel on the back face of which the microwave-absorbing heating element is laminated, and the lamination of the microwave-absorbing heating element on the back face of the top seal material or a film in the case of the later-mentioned top seal packaging. The heating laminate in the aspect 2 may be disposed in contact with the food, or may be held by the opening or inner wall of the tray so as to be fitted into the opening of the tray and be or come in contact with the food.

In the aspect A, as the tray, a paper tray or a tray whose inner wall is made of a plastic can be used. In particular, in the above-mentioned aspect in which, in the direction parallel to the bottom face of the tray, the outer edge of the microwave-absorbing heating element is positioned inside the inner wall of the tray without being in contact with the inner wall of the tray, the tray whose inner wall is made of a plastic can be preferably used because the tray can be surely prevented from melting due to heat generated by the microwave-absorbing heating element.

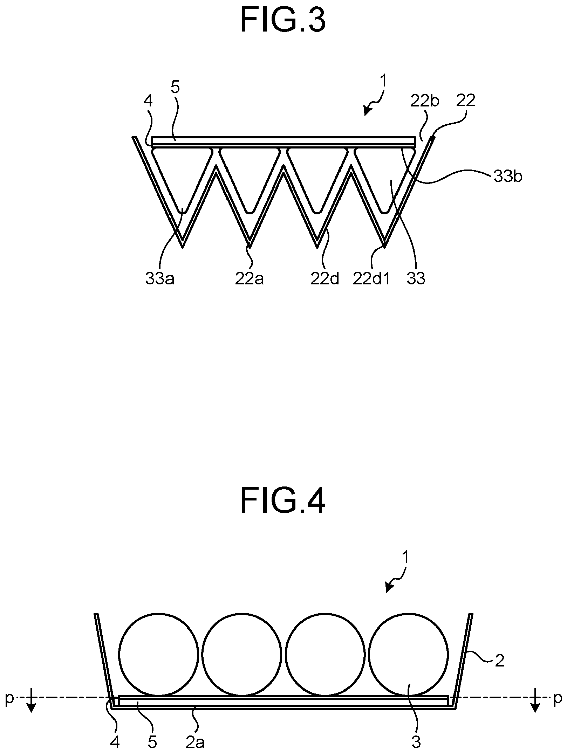

In the aspect A, the bottom face of the tray preferably has a recess or protrusions-and-recesses for accommodating the food and/or a shape for maintaining the posture of the food. For example, in the case where the food is a gyoza dumpling such as a fried gyoza dumpling, the bottom face of the tray preferably has a V-shape, for example, that allows the gyoza dumplings to be individually accommodated therein. Specifically, it is preferred that the bottom face of the tray has a shape consisting of a plurality of continuous V-shaped recesses, each of the V-shaped recesses accommodates one gyoza dumpling, an edge portion of one gyoza dumpling (a portion formed in such a manner that a gyoza dumpling skin having a filling placed thereon is folded in two to wrap the filling and peripheral portions of the gyoza dumpling skin are put together and these peripheral portions of the gyoza dumpling skin are pleated and joined, for example. The portion is referred to as "the joint edge portion" in the present specification) is accommodated in the bottom of each of the V-shaped recesses, the fried face of the gyoza dumpling faces the opening of the tray, the microwave-absorbing heating element is disposed in contact with the fried face, and the substrate is laminated on a face of the heating element, the face being opposite to a face in contact with the gyoza dumpling, in other words, the substrate is laminated on a side of the heating element, the side being closer to the opening of the tray. For example, it is preferred that, as illustrated in Fig. 3 as an example, a bottom face 22a of a tray 22 has a shape consisting of continuous V-shaped recesses 22d, an edge portion 33a of a gyoza dumpling 33 is accommodated in a bottom 22d1 of each of the V-shaped recesses, a fried face 33b of the gyoza dumpling faces an opening 22b of the tray, the microwave-absorbing heating element 4 is disposed in contact with the fried face 33b, and the substrate 5 is laminated on a face of the heating element 4, the face being opposite to a face in contact with the gyoza dumpling 33, in other words, the substrate 5 is on a side of the heating element 4, the side being closer to the opening 22b of the tray.

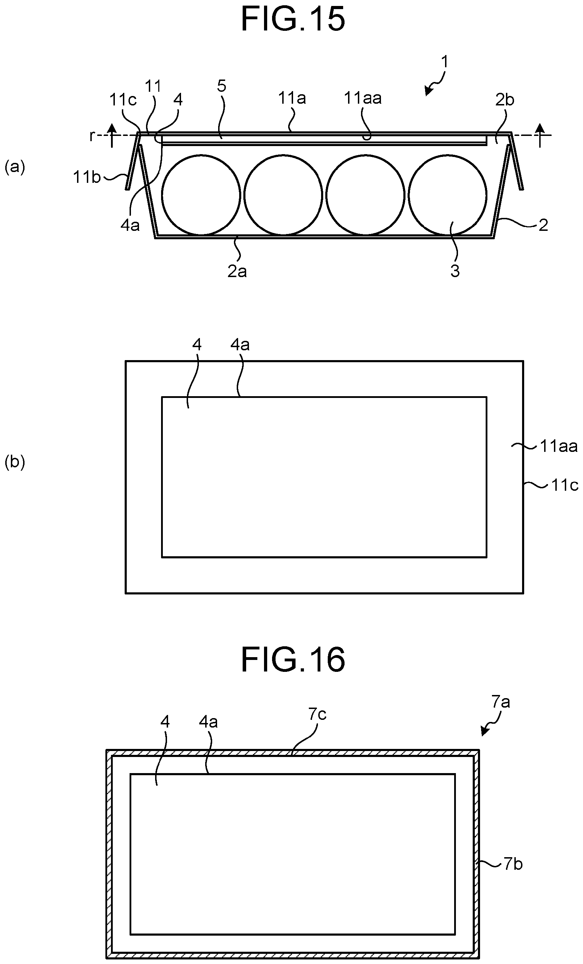

The aspect A may further include a lid configured to cover the tray on the opening side of the tray opposite to the bottom face side of the tray. The lid beneficially usually has a top panel (a top plate) facing (or opposing) the bottom face of the tray, and furthermore, preferably includes an engagement member configured to be engaged with the tray, for example, a side face portion (also referred to as a side wall portion) so as not to be shifted with respect to the tray. For example, the side face portion of the lid may be allowed to be positioned outside the tray as illustrated in Figs. 15A and 15B, or may be allowed to be fitted inside the tray. Examples of the lid not having the side face portion include a plate-like object that serves as the equivalent of the above-mentioned top panel (the top plate), is the same in size as or slightly smaller than the opening of the tray, and is configured to be fitted into the opening of the tray.

The material of the lid is not particularly limited as long as the material can be used for microwave heating, but the material is preferably heat resistant enough to avoid melting, deformation, and the like caused by usual microwave heating, and, for example, can be the material described above as the material of the tray. In the set for microwave heating, the material of the lid may be the same as or different from the material of the tray.

In the aspect including the lid, the microwave-absorbing heating element may be laminated on the back face of the top panel (the top plate) of the lid via the substrate. The back face of the top panel (the top plate) of the lid is a face of the top panel (the top plate) of the lid, the face being closer to the bottom face side of the tray and closer to the food accommodated in the set for microwave heating, when the lid covers the tray.

In the back face of the top panel of the lid, the microwave-absorbing heating element is preferably laminated via the substrate so that the outer edge of the heating element is positioned inside the outer edge of the top panel of the lid without protruding out of the outer edge of the top panel of the lid. According to this aspect, even when at least the inner wall of the tray is made of a plastic, for example, melting or deformation of the plastic due to heat generated by the microwave-absorbing heating element can be easily prevented. Such an aspect is suitable for a lid having a side face portion positioned outside the tray and a lid having no side face portion, and is particularly suitable for a lid configured to cover the tray having at least the inner wall made of a plastic.

Figs. 15A and 15B are schematic diagrams illustrating an example of the aspect A including a lid. Fig. 15A is a cross-sectional view perpendicular to the bottom face of the tray. Fig. 15B is a diagram obtained when a face r including a back face 11aa of a top panel 11a (a top plate) of the lid is viewed from the lower side of Fig. 15A. As illustrated in Figs. 15A and 15B, the set for microwave heating 1 is configured in such a manner that the food 3 is disposed on a bottom face 2a of the tray 2, the lid 11 covers the tray 2 on the opening 2b side of the tray 2, the lid 11 includes the top panel (the top plate) 11a and a side face portion 11b positioned outside the tray 2, and the microwave-absorbing heating element 4 is laminated via the substrate 5 on the back face 11aa of the top panel 11a (the top plate) of the lid so that the outer edge 4a of the heating element 4 is positioned inside an outer edge 11c of the top panel of the lid without protruding out of the outer edge 11c of the top panel of the lid. In the aspect illustrated in Figs. 15A and 15B, a gap is present between the microwave-absorbing heating element 4 and the food 3. When the set for microwave heating 1 is turned upside down at the time of microwave heating, the food 3 falls down on the microwave-absorbing heating element 4 by gravity to come in contact with the microwave-absorbing heating element 4.

### Aspect in which Microwave-absorbing Heating Element Is Disposed on Side of Food Closer to Bottom Face of Tray

An aspect in which the microwave-absorbing heating element is disposed on a side of the food, the side being closer to the bottom face of the tray, (also referred to as "the aspect B" in the present specification) is typically an aspect in which the microwave-absorbing heating element is disposed on the bottom face of the tray and the food is disposed on the heating element. The microwave-absorbing heating element is disposed in contact with the food, and the substrate is laminated on a face of the heating element, the face being opposite to a face in contact with the food, in other words, the substrate is laminated on a side of the heating element, the side being closer to the bottom face of the tray. Fig. 4 is a cross-sectional view of an example of the aspect B, the cross-sectional view being perpendicular to the bottom face of the tray. In the set for microwave heating 1, the microwave-absorbing heating element 4 is disposed on the bottom face 2a of the tray 2 via the substrate 5, the food 3 is disposed on the heating element 4, and the substrate 5 is laminated on a side of the heating element 4, the side being closer to the bottom face 2a of the tray.

The microwave-absorbing heating element is preferably disposed so that, in the direction parallel to the bottom face of the tray, the outer edge of the heating element is positioned inside the inner wall of the tray without being in contact with the inner wall of the tray. This is common to the aspect A and the aspect B. For example, taking the aspect illustrated in Fig. 4 as an example, the overhead view of a cross section p in the direction parallel to the bottom face of the tray, the cross section including the microwave-absorbing heating element 4 in Fig. 4, corresponds to Fig. 2 described above. As illustrated in Fig. 2, the microwave-absorbing heating element 4 is preferably disposed so that the outer edge 4a of the heating element 4 is positioned inside an inner wall 2c of the tray 2 without being contact with the inner wall 2c of the tray 2. The distance between the outer edge of the microwave-absorbing heating element and the inner wall of the tray in the direction parallel to the bottom face of the tray is the same as the distance described for the aspect A.

In order to prevent the microwave-absorbing heating element from shifting from its original position on the bottom face of the tray and coming in contact with the inner wall of the tray. For example, during product transportation or the like of the set for microwave heating of the aspect B, the microwave-absorbing heating element and the substrate are preferably laminated without the outer edge of the microwave-absorbing heating element protruding out of the outer edge of the substrate in the direction parallel to the bottom face of the tray. It is more preferable to use the above-described heating laminate of the aspect 2 in which the microwave-absorbing heating element and the substrate are laminated so that the outer edge of the microwave-absorbing heating element is positioned inside the outer edge of the substrate.

As described above, also the aspect B can prevent the tray from melting due to heat generated by the microwave-absorbing heating element, and therefore, the tray may be a paper tray or a tray whose inner wall is made of a plastic. In a conventional aspect in which a microwave-absorbing heating element is present on a tray, the tray is limited to a paper tray or the like. In contrast, in the present invention, trays made of various types of materials can be used.

In the aspect B, as described above, the bottom face of the tray may have a recess or protrusions-and-recesses for accommodating the food and/or have a shape for maintaining the posture of the food. However, since the microwave-absorbing heating element is interposed between the bottom face of the tray and the food, the microwave-absorbing heating element also preferably has a shape that follows the shape of the bottom face of the tray.

From the viewpoint of making the microwave-absorbing heating element have a simpler shape such as a plate shape, the bottom face of the tray of the aspect B preferably does not have a recess or protrusions-and-recesses for accommodating the food and/or does not have a shape for maintaining the posture of the food. For example, the bottom face of the tray is preferably a plane without protrusions-and-recesses or is flat, or preferably has only protrusions-and-recesses such as grooves not for accommodating the food or maintaining the posture of the food. Furthermore, a cover disposed on the food and having a shape for maintaining the posture of the food is more preferably used.

In the case where the food is a gyoza dumpling such as a fried gyoza dumpling, the bottom face of the tray preferably does not have a recess or protrusions-and-recesses for accommodating the food and/or does not have a shape for maintaining the posture of the food. For example, the bottom face of the tray is preferably a plane without protrusions-and-recesses or is flat, or preferably has only protrusions-and-recesses such as grooves not for accommodating the food or maintaining the posture of the food. Furthermore, a cover disposed on the gyoza dumpling and having a shape (for example, a V-shape) for maintaining the posture of the gyoza dumpling is more preferably used.

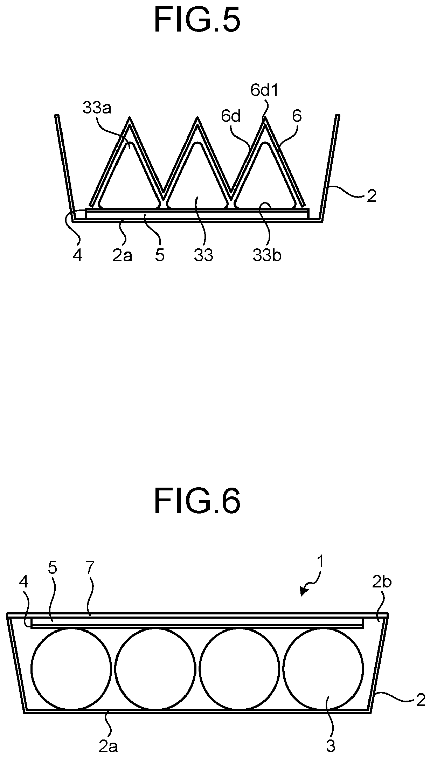

For example, in the case where the food is a gyoza dumpling such as a fried gyoza dumpling, specifically, it is preferred that the cover has a shape consisting of a plurality of continuous V-shaped recesses, each of the V-shaped recesses accommodates one gyoza dumpling, the edge portion (the joint edge portion) of the gyoza dumpling is accommodated in the bottom of each of the V-shaped recesses, the fried face of the gyoza dumpling faces toward the bottom face side of the tray, the microwave-absorbing heating element is disposed in contact with the fried face, and the substrate is laminated on a face of the heating element, the face being opposite to a face in contact with the gyoza dumplings, in other words, the substrate is laminated on a side of the heating element, the side being closer to the bottom face of the tray. For example, as illustrated in Fig. 5 as an example, it is preferred that the bottom face 2a of the tray 2 is a plane without protrusions-and-recesses or is flat, the microwave-absorbing heating element 4 is disposed on the bottom face 2a of the tray 2 via the substrate 5, the substrate 5 is laminated on a side of the heating element 4, the side being closer to the bottom face 2a of the tray, the gyoza dumpling 33 is disposed on the heating element 4 so that the fried face 33b of the gyoza dumpling 33 is in contact with the heating element 4, and the cover 6 is disposed on the gyoza dumpling 33, the cover 6 has a shape 6d consisting of continuous V-shaped recesses, and the cover 6 is disposed on the gyoza dumpling 33 so that the edge portion 33a of the gyoza dumpling 33 is accommodated in the bottom (protruding upward in Fig. 5) 6d1 of each of the V-shaped recesses.

### Top Sealing

In the set for microwave heating according to the present invention, a film covering the opening of the tray may be subjected to compression-bonding to the upper end of the tray. In the present specification, the compression-bonding is also referred to as "top sealing" or "top seal packaging" and the film is also referred to as "a top seal material".

For the compression-bonding, for example, conventional top sealing or top seal packaging technologies, such as sealing by thermo-compression bonding of a top seal material to the upper end of the opening of the tray can be used. For example, an easy peel film having both sealing performance and easiness of opening to easily open a sealing portion or a compression-bonding portion or easy-opening performance can be used as the top seal material.

As the top seal material, a conventional top seal material, such as a top seal material including a PET film and a laminate film of a PET film and a barrier film can be used, but, a laminated film of a PET film and an easy peel film is preferably used.

The top seal can be applied to any of the above-described aspects A and B. The conditions for the above-described compression-bonding depend on, for example, materials of the tray and the top seal material, but heating or thermo-compression bonding is performed, for example, once or a plural of times at a temperature in a range of usually 80°C or higher and 250°C or lower, preferably 120°C or higher and 240°C or lower, more preferably 150°C or higher and 230°C or lower for a time period in a range of usually 0.1 seconds or longer and 30 seconds or shorter, preferably 0.2 seconds or longer and 10 seconds or shorter, more preferably 0.5 seconds or longer and 5 seconds or shorter.

In the case of top seal packaging in the aspect A, the thickness of the substrate laminated on the microwave-absorbing heating element is made relatively thin. For example, from the viewpoint of making it possible to remove the heating element together with the top seal material, the thickness of the substrate is preferably set to the above-described thickness, whereby there is brought an advantage that, while a crispy texture is certainly given to the food by heat generation of the microwave-absorbing heating element, the microwave-absorbing heating element having generated heat by microwave heating fuses with the top seal material, so that the microwave-absorbing heating element can be removed together with the top seal material.

From the viewpoint of realizing this advantage, the distance between the substrate laminated on the microwave-absorbing heating element and the top seal material is preferably 0 mm at least at the time of microwave heating, that is, the substrate and the top seal material are preferably in contact with each other at that time. However, the distance between the substrate laminated on the microwave-absorbing heating element and the top seal material after (possibly immediately after) top seal packaging and before microwave heating is preferably 0 mm or more and 30 mm or less, and the upper limit thereof is more preferably 20 mm or less and still more preferably 15 mm or less.

The microwave-absorbing heating element may be laminated on a side of the top seal material or the film, the side being closer to the food (on the back face thereof closer to the bottom face of the tray) via the substrate not only at the time of microwave heating, but also after (possibly immediately after) top seal packaging and before microwave heating. Assuming that the distance between the substrate laminated on the microwave-absorbing heating element and the top seal material is 0 mm, the substrate and the top seal material may be in contact with or bonded to each other.

Preferred examples of the top sealing from the viewpoint of realizing the above-mentioned advantage include top sealing in which, using the above-described top seal material and using a plastic tray as the tray, heating or thermo-compression bonding is performed under the above-described compression-bonding conditions.

Fig. 6 is a cross-sectional view of an example of the aspect A in which top seal packaging is performed, the cross-sectional view being perpendicular to the bottom face of the tray. The set for microwave heating 1 is configured in such a manner that the food 3 is disposed on the bottom face 2a of the tray 2, the microwave-absorbing heating element 4 is disposed on the food 3, the substrate 5 is laminated on a side of the heating element 4, the side being closer to the opening 2b of the tray, and the top seal material 7 is compression-bonded to an upper end on the opening 2b side of the tray 2. Fig. 6 is a diagram illustrating an aspect in which the substrate laminated on the microwave-absorbing heating element and the top seal material are in contact with each other before microwave heating.

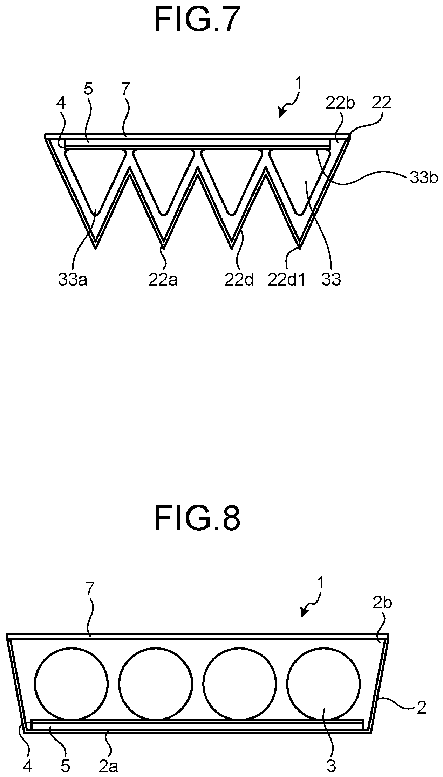

Fig. 7 is a diagram illustrating an example of an aspect in which the tray illustrated in Fig. 6 is a tray having a V-shaped bottom face as illustrated in Fig. 3, which is suitable when the food is, for example, a gyoza dumpling such as a fried gyoza dumpling.

Examples of the aspects in which, as illustrated in Figs. 6 and 7, the microwave-absorbing heating element is laminated on a side of the top seal material or the film, the side being closer to the food (on the back face thereof closer to the bottom face of the tray) via the substrate not only at the time of microwave heating, but also after (possibly immediately after) top seal packaging and before microwave heating include an aspect in which, as illustrated in Fig. 16, the microwave-absorbing heating element 4 is laminated on the back face 7a of the top seal material or the film 7 via the substrate so that the outer edge 4a of the heating element does not protrude out of the outer edge 7c of the inner wall of the top seal material or the film 7, the outer edge 7c of the inner wall being defined by the compression-bonding portion 7b to the upper end of the tray and the outer edge 4a of the heating element is positioned inside the outer edge 7c of the inner wall of the top seal material or the film. According to this aspect, even when at least the inner wall of the tray is made of a plastic, for example, melting or deformation of the plastic due to heat generated by the microwave-absorbing heating element can be easily prevented.

Fig. 8 is a cross-sectional view of an example of the aspect B in which top seal packaging is performed, the cross-sectional view being perpendicular to the bottom face of the tray. The set for microwave heating 1 is configured in such a manner that the microwave-absorbing heating element 4 is disposed on the bottom face 2a of the tray 2 via the substrate 5, the food 3 is disposed on the heating element 4, the substrate 5 is laminated on a side of the heating element 4, the side being closer to the bottom face 2a of the tray, and the top seal material 7 is compression-bonded to the upper end on the opening 2b side of the tray 2.

### Package

The package according to the present invention includes the above-described set for microwave heating and the outer packaging bag configured to accommodate the set for microwave heating.

### Outer Packaging Bag

The outer packaging bag is not particularly limited, and examples of the outer packaging bag that can be used include what has been conventionally used as an outer packaging bag for frozen foods, refrigerated foods, non-refrigerated foods, or the likes. Specific examples of the outer packaging bag include a pillow packaging bag produced by putting sealant-side portions of a plastic film together and heat-sealing a back seal, and upper and lower edges thereof. A method for accommodating the set for microwave heating in the outer packaging bag is not particularly limited, and examples of the method that can be used include conventionally known methods such as pillow packaging.

The set for microwave heating to be accommodated in the outer packaging bag may be any of the above-mentioned aspects A and B. The aspect A or B may have the above-mentioned top seal, but, from the viewpoint of easy packaging, the aspect A or B preferably has no top seal.

In the case where the set for microwave heating of the aspect A is accommodated in the outer packaging bag, the thickness of the substrate laminated on the microwave-absorbing heating element is made relatively thin, and, for example, from the viewpoint of easiness of removal of the outer packaging bag, the thickness of the substrate is set to the above-mentioned thickness, whereby there is brought an advantage that, while a crispy texture is certainly given to the food by heat generation of the microwave-absorbing heating element, the microwave-absorbing heating element having generated heat by microwave heating fuses with the outer packaging bag, so that the heating element can be removed together with the outer packaging bag.

From the viewpoint of realizing this advantage, the distance between the substrate laminated on the microwave-absorbing heating element and the outer packaging bag is preferably 0 mm at least at the time of microwave heating, that is, the substrate and the outer packaging bag are preferably in contact with each other at that time. However, the shortest distance between the substrate laminated on the microwave-absorbing heating element and the inner wall of the outer packaging bag after (possibly immediately after) manufacture of the package and before microwave heating is preferably 0 mm or more and 100 mm or less, the lower limit thereof may be 5 mm or more and 10 mm or more, and the upper limit thereof is more preferably 80 mm or less and still more preferably 50 mm or less.

Preferred examples of the outer packaging bag from the viewpoint of realizing this advantage include plastic films, such as OPP//CPP and PET//LDPE (OPP stands for biaxially oriented polypropylene, CPP stands for non-oriented polypropylene, and LDPE stands for low-density polyethylene). For example, in the case of pillow packaging, the width of a plastic film before pillow packaging (sealing), the width not including the width of a sealant portion for a back seal of the plastic film, that is, in a cross section of a package after pillow packaging, the cross section being perpendicular to the back seal of the outer packaging bag, (that is, a cross section parallel to the upper and lower edges to be heat-sealed in the pillow packaging), a perimeter delimited by the outer packaging bag (that is, the length of the inner circumference of the outer packaging bag) is longer than the length of the outer circumference of the tray, that is, the sum total of the length of the bottom face of the tray, the length of the side wall thereof, and the length of the opening thereof (a straight line connecting the upper ends of two side walls facing each other) in the cross section by preferably 101% or more and 130% or less, more preferably 1020 or more and 120% or less, and still more preferably 1030 or more and 110% or less.

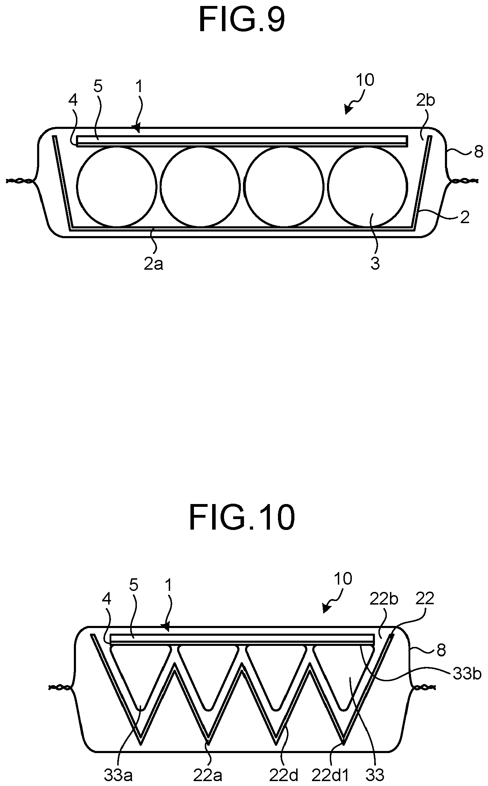

Fig. 9 is a cross-sectional view of an example of a package 10 in which the set for microwave heating of the aspect A is accommodated in a pillow packaging bag as the outer packaging bag, the cross-sectional view being perpendicular to the bottom face of the tray. The set for microwave heating 1 accommodated in the pillow packaging bag 8 is configured in such a manner that the food 3 is disposed on the bottom face 2a of the tray 2, the microwave-absorbing heating element 4 is disposed on the food 3, and the substrate 5 is laminated on a side of the heating element 4, the side being closer to the opening 2b of the tray.

Fig. 10 is a diagram illustrating an example of an aspect in which the tray illustrated in Fig. 9 is a tray having a V-shaped bottom face as illustrated in Fig. 3, which is suitable when the food is, for example, a gyoza dumpling such as a fried gyoza dumpling.

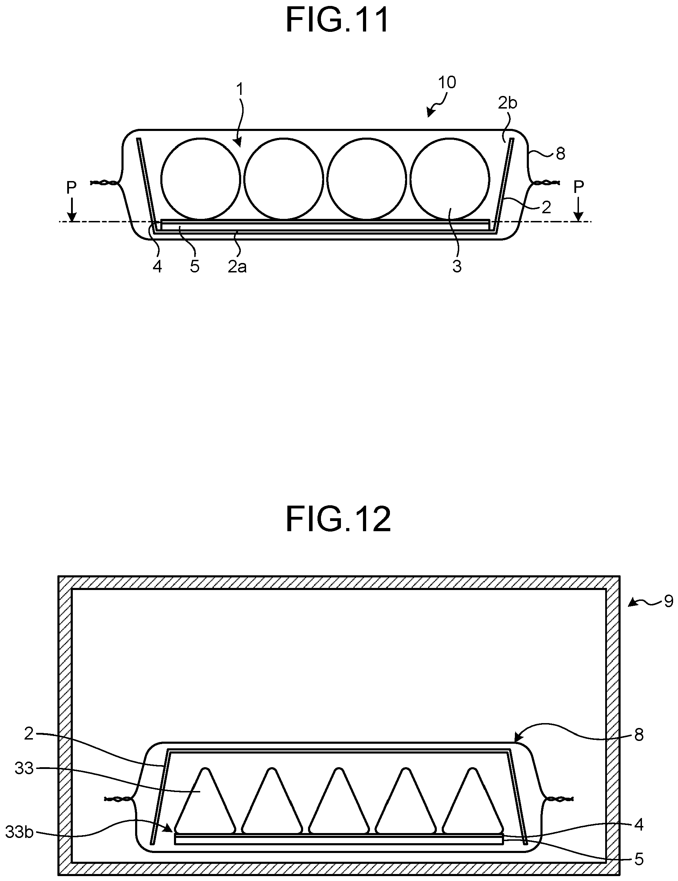

Fig. 11 is a cross-sectional view of an example of a package in which the set for microwave heating of the aspect B is accommodated in a pillow packaging bag as the outer packaging bag, the cross-sectional view being perpendicular to the bottom face of the tray. The set for microwave heating 1 accommodated in the pillow packaging bag 8 is configured in such a manner that the microwave-absorbing heating element 4 is disposed on the bottom face 2a of the tray 2 via the substrate 5, the food 3 is disposed on the heating element 4, and the substrate 5 is laminated on a side of the heating element 4, the side being closer to the bottom face 2a of the tray.

### Microwave Heating

The set for microwave heating and the package according to the present invention can be heated on an as-is basis in a microwave oven. Specifically, only the set for microwave heating taken out of the outer packaging bag after opening the package may be heated in a microwave oven, or the set for microwave heating as the contents of the package may be heated in a microwave oven together with the outer packaging bag without opening the package. Alternatively, the set for microwave heating including the top seal material may be heated in a microwave oven after the top seal material is peeled off or removed, or may be heated in a microwave oven without peeling off the top seal material. In the case of the above-described aspect in which the substrate is relatively thin, there is brought an advantage that, even when microwave heating is given to the set for microwave heating together with the outer packaging bag or microwave heating is performed without removing the top seal material, the microwave-absorbing heating element having generated heat due to microwave heating fuses with the outer packaging bag or the top seal material, so that the heating element can be removed together with the outer packaging bag or the top seal material.

In the microwave heating, the set for microwave heating and the package can be placed in a microwave oven regardless of the up-down orientation in the vertical direction. However, in the above-described aspect in which the substrate is relatively thin, from the viewpoint of taking an advantage that the microwave-absorbing heating element having generated heat by microwave heating fuses with the outer packaging bag or the top seal material, so that the heating element can be removed together with the outer packaging bag or the top seal material, there is preferred the aspect A in which the set for microwave heating or the package is placed in a microwave oven, with a side closer not to the food but to the microwave-absorbing heating element being positioned vertically lower, in other words, in which the set for microwave heating or the package is placed in a microwave oven so that the outer packaging bag or the top seal material is present on an object on which a target is placed, such as the bottom face (floor) of the microwave oven, a turntable, or a plate, the substrate is present on the outer packaging bag or the top seal material, the substrate is laminated on the microwave-absorbing heating element, and the food is in contact with the heating element. In the aspect, in the case of a food having a fried face, the set for microwave heating or the package food is preferably disposed so that the fried face is positioned on the lower side, that is, the fried face is in contact with the heating element.

### Effect and Use of Set for Microwave Heating and Package According to Present Invention

The set for microwave heating and the package according to the present invention have the above-described features, and therefore can give an appropriate crispy texture to a food by heat generation of the microwave-absorbing heating element by microwave heating. In the case of a food having not only a fried face but also a portion other than the fried face, such as a fried gyoza dumpling, the softness of the portion can be maintained while an appropriate crispy texture can be given to the fried face.

Specifically, the microwave-absorbing heating element is disposed in contact with the food, and the substrate is laminated on a face of the heating element, the face being opposite to a face thereof in contact with the food, whereby an appropriate crispy texture can be given to a portion of the food, the portion being in contact with the microwave-absorbing heating element, (for example, the fried face), and also a portion of the food, the portion being apart from the microwave-absorbing heating element, (for example, the joint edge portion of the gyoza dumpling) can be avoided to have a hard texture caused by overheating, whereby the softness of the portion can be maintained, and furthermore, by adjusting the thickness of the substrate, the quality of the fried face can be increased and the softness of the portion other than the fried face, such as the joint edge portion of the gyoza dumpling, can be adjusted or enhanced. Generally, a relatively thin portion of a food, such as the joint edge portion of a gyoza dumpling, is prone to being overheated by microwave heating, and also prone to being further overheated additionally by heat generation of the microwave-absorbing heating element. However, in the present invention, overheating can be avoided, whereby softness can be maintained.

In the present invention, a preferable texture can be given as described above, and in addition, even in the case of a tray made of a plastic, melting, deformation, degeneration, discoloring, and the like of the tray can be prevented, and furthermore, there can be applied any of an aspect in which, by adjusting the thickness of the substrate, melting, deformation, degeneration, discoloring, and the like of the outer packaging bag or the top seal material can be prevented, and an aspect in which the microwave-absorbing heating element having generated heat and the outer packaging bag or the top seal material having fused with the microwave-absorbing heating element can be removed together.

Furthermore, as described above, the set for microwave heating and the package according to the present invention can be heated in a microwave oven, regardless of the up-down orientation in the vertical direction, and has the simplicity of giving a preferable texture including a crispy texture only by microwave heating, and furthermore can preferably have designing possibilities for, for example, melting and removal of a film or a packaging material for the tray, whereby the set for microwave heating and the package can be suitably used for microwave heating.

### Examples

The present invention will be described in detail by using examples. However, the present invention is not limited by examples below.

### Examples 1 to 12: Production of Package

A heating element formed by depositing aluminum onto a (12 um thick) PET film (in which the thickness of the aluminum-deposited layer was 100 Å) was used. Paper having the thicknesses illustrated in Table 1 as a substrate was laminated on the aluminum-deposited layer-side face of the heating element to produce a heating laminate.

Five fried gyoza dumplings taken from the "Fried gyoza dumplings (meat) (pre-fried) for cooking by steam convection without removing from bag" (product name; manufactured by Ajinomoto Frozen Foods CO., INC; hereinafter referred to as "the sample") were disposed on the above-mentioned heating laminate with a fried face upward so that the heating element was in contact with the fried face, and were accommodated inside a tray (made of polypropylene) taken from the sample, whereby a set for microwave heating was produced.

Using a laminate film (size: 270 mm × 230 mm) including PET 12p/LLDPE 40µ as a film for an outer packaging bag configured to accommodate the set for microwave heating and using a heat sealer, a pillow package having a cross section illustrated in Fig. 9 was produced.

### Comparative Example 1: Production of Comparative Package

A comparative package was produced in the same manner as in Examples, except that the heating laminate including the heat element and the paper was not used.

### Microwave Heating

A cut with a length of approximately 5 cm was made at one end of the outer packaging bag of each of the packages obtained in the above-described production examples, and, using "HITACHI_MRO-S8Y (flat type)" (31L steam microwave oven; manufactured by Hitachi, Ltd.) as a microwave oven, cooking with heat was performed at 500 W for 2 minutes. For each of the packages, the cooking with heat was performed under the same heating conditions by using the same microwave oven. In the case where the inside of the microwave oven was hot, the cooking was performed after cooling with ice or the like. Until microwave heating was performed, each of the packages was stored in a freezer having a temperature of -18°C to prevent the gyoza dumplings from thawing.

Each of the packages obtained in Examples 1 to 12 and Comparative Example 1 was placed in a microwave oven 9 with the fried face 33b of the fried gyoza dumplings downward as illustrated in the cross-sectional view in Fig. 12, and was subjected to microwave heating.

### Evaluation

For each of the packages after the above-described microwave cooking, the quality of the fried faces and the joint edge portions of the gyoza dumplings and the presence or absence of sticking of the surface of the heating laminate to the outer packaging bag were evaluated according to evaluation criteria illustrated in Table 2. When the fried face has appropriate hardness, a crispy texture is achieved. Table 1 shows results.

**[Table 1]**

| | Thickness of Substrate (mm) | Sticking to Outer Packaging Bag | Fried Face | Joint Edge Portion |
|---|---|---|---|---|
| Comparative Example 1 | Null | No | × | × |
| Example 1 | 0.05 | Yes | ○ | ○ |
| Example 2 | 0.07 | Yes | ○ | ⊚ |
| Example 3 | 0.09 | Yes | ○ | ⊚ |
| Example 4 | 0.13 | Yes | ○ | ⊚ |
| Example 5 | 0.21 | Yes | ⊚ | ⊚ |
| Example 6 | 0.30 | Yes | ⊚ | ⊚ |
| Example 7 | 0.40 | Yes | ⊚ | ⊚ |
| Example 8 | 0.51 | Yes | ⊚ | ⊚ |
| Example 9 | 0.61 | Yes | ⊚ | ⊚ |
| Example 10 | 0.64 | No | ⊚ | ⊚ |
| Example 11 | 0.68 | No | ⊚ | ⊚ |
| Example 12 | 2.09 | No | ⊚ | ⊚ |

**[Table 2]**

| Evaluation Criteria | Quality of Fried Face |
|---|---|
| ⊚ | Both peripheral portion and center portion of fried face are hard. |
| ○+ | Peripheral portion of fried face is hard, whereas center portion of fried face is slightly hard. |
| ○ | Only peripheral portion of fried face is hard. |
| × | Fried face is soft. |
| | |
| Evaluation Criteria | Quality of Joint Edge Portion |
| ⊚ | Soft |
| ○ | Slightly hard |
| × | Hard |
| | |
| Evaluation Criteria | Sticking to Outer Packaging Bag |
| Yes | Heating Laminate sticks to Outer Packaging Bag. |
| No | Heating Laminate does not stick to Outer Packaging Bag. |

From Table 1, it was found that, in Examples in which the microwave-absorbing heating element was disposed in contact with the food and the substrate is laminated on a face of the heating element, the face being opposite to a face thereof being in contact with the food, both an increase in quality of the fried face and softness of the joint edge portion were achieved. Furthermore, it was found that adjusting the thickness of the substrate made it possible to achieve a further increase in quality of the fried face and further softness of the joint edge portion and adjust the presence and absence of sticking to the outer packaging bag. In Examples 1 to 12 and Comparative Example 1, melting, deformation, and degeneration/discoloration of the trays due to the microwave heating or heat generation of the microwave-absorbing heating elements were not observed.

### Example 13: Production of Set for Microwave Heating

The set for microwave heating was produced in the same manner as in Example 8, except that the pillow package including the outer packaging bag was not used. Cooking with heat was performed in the same manner as for the above-described microwave heating, and evaluation was made in the same manner as for the above-described evaluation.

### Example 14

The same package as that obtained in Example 8 was cooked with heat in the same manner as for the above-described microwave heating, except that the package was placed inside the microwave oven with the fried face of the fried gyoza dumplings upward, and evaluation was made in the same manner as for the above-described evaluation.

### Example 15

The same set for microwave heating as that obtained in Example 13 was cooked with heat in the same manner as for the above-described microwave heating, except that the set for microwave heating was placed in the microwave oven 9 with the fried face 33b of the fried gyoza dumplings upward as illustrated in the cross-sectional view in Fig. 13, and evaluation was made in the same manner as for the above-described evaluation.

### Comparative Example 2

The same package as that obtained in Comparative Example 1 was cooked with heat in the same manner as for the above-described microwave heating, except that the package was placed in the microwave oven with the fried face of the fried gyoza dumplings upward, and evaluation was made in the same manner as for the above-described evaluation.

Table 3 shows results of Examples 13 to 15 and Comparative Example 2.

**[Table 3]**

| | Thickness of Substrate (mm) | In Cooking | | Sticking to Outer Packaging Bag | Fried Face | Joint Edge Portion |
|---|---|---|---|---|---|---|
| | | With Fried Face Upward or Downward | With or Without Outer Packaging Bag | | | |
| Example 13 | 0.51 | downward | without | - | ⊚ | ⊚ |
| Example 14 | 0.51 | upward | with | No | ○+ | ⊚ |
| Example 15 | 0.51 | upward | without | - | O+ | ○ |
| Comparative Example 2 | Null | upward | with | No | × | ○ |

From Table 3, it was found that, in Examples in which the microwave-absorbing heating element was disposed in contact with the food and the substrate was laminated on a face of the heating element, the face being opposite to a face in contact with the food, even in the case of the set for microwave heating not including the outer packaging bag, both an increase in quality of the fried face and softness of the joint edge portion were achieved, as in the case of the package including the outer packaging bag. Furthermore, it was found that, in the case where the microwave-absorbing heating element was not desired to fuse with the outer packaging bag during the microwave heating, an aspect such as Example 14 in which the package or the set for microwave heating was placed in the microwave oven with the fried face of the food upward, that is, an aspect in which the package or the set for microwave heating was placed in the microwave oven so that the microwave-absorbing heating element was disposed in contact with the fried face of the food, the substrate was laminated on the heating element, and the outer packaging bag was present on the substrate was more desirable than an aspect like Example 8 in which the set for microwave heating or the package was configured by changing the up-down orientation of Example 14. In Examples 13 to 15 and Comparative Example 2, melting, deformation, and degeneration/discoloration of the trays due to the microwave heating or heat generation of the microwave-absorbing heating elements were not observed.

### Examples 16 and 18: Production of Package

A package was produced using a heating laminate including the same heating element and paper as those in Example 6 in the same manner as in Example 6, except that a paper tray having a thickness of 0.35 mm was used in place of the tray removed from the sample. The package was placed in the microwave oven so that the up-down orientation of the fried faces of the fried gyoza dumplings was set as illustrated in Table 4, and cooking with heat was performed in the same manner as for the above-described microwave heating, and evaluation was made in the same manner as for the above-described evaluation.

### Examples 17 and 19: Production of Package

A package was produced using a heating laminate including the same heating element and paper as those in Example 8 in the same manner as in Example 8, except that a paper tray having a thickness of 0.35 mm was used in place of the tray removed from the sample. The package was placed in the microwave oven so that the up-down orientation of the fried faces of the fried gyoza dumplings was set as illustrated in Table 4, and cooking with heat was performed in the same manner as for the above-described microwave heating, and evaluation was made in the same manner as for the above-described evaluation.

Table 4 shows results of Examples 16 to 19.

**[Table 4]**

| | Example 16 | Example 17 | Example 18 | Example 19 |
|---|---|---|---|---|
| Thickness of Substrate (mm) | 0.30 | 0.51 | 0.30 | 0.51 |
| In Microwave Cooking | With fried face upward | | With fried face downward | |
| Joint Edge Portion | ○ | ⊚ | ○ | ⊚ |
| Fried Face | ○ | ○+ | ○+ | ⊚ |
| Sticking to Outer Packaging Bag | No | No | Yes | Yes |

From comparisons between results in Table 4 and Table 1 and Table 3, it was found that even the aspects using the paper tray were as effective as the aspects using the plastic tray.

## Claims

1. A set for microwave heating, comprising:
a tray;
a food accommodated in the tray; and
a heating laminate comprising
a heating element configured to generate heat by microwave irradiation, and
a substrate being laminated on a first face of the heating element,
wherein the heating laminate is disposed in such a way that a second face of the heating element, which is opposite to the first face of the heating element, faces the food, wherein the food and the second face of the heating element facing the food are disposed in such a way that they are in contact with each other or can come in contact with each other.

2. The set for microwave heating according to claim 1, wherein an inner wall of the tray is made of a plastic.

3. The set for microwave heating according to claim 1, wherein the heating element faces a side of the food, the side being at an opening side of the tray opposite to a bottom face side of the tray.

4. The set for microwave heating according to claim 1, wherein, when the heating element faces a side of the food, the side being at an opening side of the tray opposite to a bottom face side of the tray, an inner wall of the tray is made of a plastic.

5. The set for microwave heating according to claim 1, wherein the heating element comprises a conductive substance-containing thin film layer.

6. The set for microwave heating according to claim 5, wherein the heating element further comprises a heat-resistant layer, and the heating element is disposed in such a way that the heat-resistant layer faces the food.

7. The set for microwave heating according to claim 5, wherein, in a direction parallel to a bottom face of the tray, an outer edge of the conductive substance-containing thin film layer is positioned inside an inner wall of the tray without being in contact with the inner wall of the tray.

8. The set for microwave heating according to claim 5, wherein, in a direction parallel to a bottom face of the tray, the heating element and the substrate are laminated without an outer edge of the conductive substance-containing thin film layer protruding out of an outer edge of the substrate.

9. The set for microwave heating according to claim 8, wherein, in the direction parallel to the bottom face of the tray, the heating element and the substrate are laminated in such a way that the outer edge of the conductive substance-containing thin film layer is positioned inside the outer edge of the substrate.

10. The set for microwave heating according to claim 1, wherein the food and the heating element are accommodated in the tray without protruding from an opening of the tray in a cross section perpendicular to a bottom face of the tray.

11. The set for microwave heating according to claim 1, wherein the food is a ready-cooked food having a fried face, and the heating element is disposed to face the fried face; or wherein the food is a filling-wrapping food, and the heating element is disposed to face the fried face of the filling-wrapping food.

12. The set for microwave heating according to claim 1, wherein the substrate has a thickness of 0.02 mm or more.

13. A package, comprising:
the set for microwave heating according to any one of claims 1 to 12; and
an outer packaging bag configured to accommodate the set for microwave heating.

14. The package according to claim 13, wherein the substrate has a thickness of 0.02 mm or more and less than 0.65 mm, or wherein the substrate has a thickness of more than 0.62 mm.
